# EUROPEAN PATENT APPLICATION

(11) **EP 4 671 970 A1**
(43) Date of publication of application: **31.12.2025**
(21) Application number: 25185454.3
(22) Date of filing: 26.06.2025
(51) Int. Cl.: G06F 8/65

(54) **SOFTWARE UPDATES VIA RANGE EXTENDER**

(30) Priority: 28.06.2024 US 202418759248
(71) Applicant: Synaptics Incorporated, San Jose, CA 95131 (US)
(72) Inventor: KORI, Basavaraj Halappa, San Jose, 95131 (US); R V, Vishwa Bharathi, San Jose, 95131 (US)
(74) Representative: J A Kemp LLP

(57) **Abstract**

This disclosure provides methods, devices, and systems for wireless communications. The present implementations more specifically relate to providing software updates via range extenders within digital enhanced cordless telecommunications (DECT) ultra low energy (ULE) home automation networks (HANs) without increasing the power consumption of portable devices. In some implementations, the range extender may receive instructions associated with a first software update via a first link with a first device, may obtain data associated with the first software update, and may release the first link upon obtaining the data associated with the first software update. The range extender may transmit the instructions and the data associated with the first software update via a second link with a second device and may release the second link upon receiving confirmation of the instructions and the data associated with the first software update by the second device.

## Description

### TECHNICAL FIELD

The present implementations relate generally to wireless communication, and specifically to providing software updates via range extenders for home automation networks.

### BACKGROUND OF RELATED ART

Digital enhanced cordless telecommunications (DECT) ultra low energy (ULE) is a wireless communication standard that can be used to implement home automation, security, and climate control in residential and enterprise environments. The basic building block of a ULE system is a home automation network (HAN) that includes a fixed part (FP) and at least one portable part (PP). A DECT ULE PP (also referred to as a "leaf") can be any portable device that is used in home automation, security, or climate control applications. Example suitable portable devices include sensors (such as smoke detectors or motion detectors), thermostats, and electricity control elements, among other examples. The DECT ULE FP (also referred to as the "root node") is a base station or access point that bridges a connection between the portable devices and a local network (or the Internet). The base station communicates with the portable devices over a DECT air interface. Each over-the-air (OTA) connection between the base station and a respective portable device is referred to as a wireless communication "link." Under existing versions of the DECT standard, a repeater (also referred to as a "wireless relay station") can extend the range of the DECT air interface by relaying messages and data between a base station and a portable device.

Existing versions of the DECT standard require that a base station and a portable device establish an end-to-end link in order to provide a software update over-the-air (SUOTA) to the portable device. As such, the base station must transmit the software update to the portable device over the end-to-end link. However, establishing an end-to-end link can be time consuming, as the repeater must establish concurrent links with both the base station and the portable device. Accordingly, a portable device may have to remain active for a relatively long time under the existing SUOTA process, while waiting to establish an end-to-end link with the base station over which to receive the software update, which can increases the power consumption of the portable device. Because the portable devices of a HAN are often powered by batteries, there is a need to provide software updates within a HAN without increasing the power consumption of the portable devices.

### SUMMARY

This Summary is provided to introduce in a simplified form a selection of concepts that are further described below in the Detailed Description. This Summary is not intended to identify key features or essential features of the claimed subject matter, nor is it intended to limit the scope of the claimed subject matter.

One innovative aspect of the subject matter of this disclosure can be implemented in a method of providing a software update by a wireless communication device. The method includes receiving instructions associated with a first software update via a first link with a first device; obtaining data associated with the first software update; releasing the first link responsive to obtaining the data associated with the first software update; transmitting the instructions and the data associated with the first software update via a second link with a second device; receiving confirmation of the instructions and the data associated with the first software update by the second device; and releasing the second link responsive to receiving the confirmation by the second device.

Another innovative aspect of the subject matter of this disclosure can be implemented in a wireless communication device, including a processing system and a memory. The memory stores instructions that, when executed by the processing system, cause the wireless communication device to receive instructions associated with a first software update via a first link with a first device; obtain data associated with the first software update; release the first link responsive to obtaining the data associated with the first software update; transmit the instructions and the data associated with the first software update via a second link with a second device; receive confirmation of the instructions and the data associated with the first software update by the second device; and release the second link responsive to receiving the confirmation by the second device.

### BRIEF DESCRIPTION OF THE DRAWINGS

The present implementations are illustrated by way of example and are not intended to be limited by the figures of the accompanying drawings.
FIG. 1 shows a block diagram of an example wireless communication network, according to some implementations.
FIG. 2 shows a block diagram of an example digital enhanced cordless telecommunications (DECT) ultra low energy (ULE) range extender, according to some implementations.
FIG. 3 shows a block diagram of another example wireless communication network, according to some implementations.
FIGS. 4A, 4B, and 4C show sequence diagrams depicting an example process for providing a software update in a home automation network (HAN), according to some implementations.
FIG. 5 shows a sequence diagram depicting an example process for retrieving software update data from a base station, according to some implementations.
FIG. 6 shows a block diagram of another example wireless communication network, according to some implementations.
FIG. 7 shows a block diagram of another example wireless communication network, according to some implementations.
FIG. 8 shows a block diagram of an example wireless communication device, according to some implementations.
FIG. 9 shows an illustrative flowchart depicting an example operation for providing a software update, according to some implementations.

### DETAILED DESCRIPTION

In the following description, numerous specific details are set forth such as examples of specific components, circuits, and processes to provide a thorough understanding of the present disclosure. The term "coupled" as used herein means connected directly to or connected through one or more intervening components or circuits. The terms "electronic system" and "electronic device" may be used interchangeably to refer to any system capable of electronically processing information. Also, in the following description and for purposes of explanation, specific nomenclature is set forth to provide a thorough understanding of the aspects of the disclosure. However, it will be apparent to one skilled in the art that these specific details may not be required to practice the example embodiments. In other instances, well-known circuits and devices are shown in block diagram form to avoid obscuring the present disclosure. Some portions of the detailed descriptions which follow are presented in terms of procedures, logic blocks, processing and other symbolic representations of operations on data bits within a computer memory.

These descriptions and representations are the means used by those skilled in the data processing arts to most effectively convey the substance of their work to others skilled in the art. In the present disclosure, a procedure, logic block, process, or the like, is conceived to be a self-consistent sequence of steps or instructions leading to a desired result. The steps are those requiring physical manipulations of physical quantities. Usually, although not necessarily, these quantities take the form of electrical or magnetic signals capable of being stored, transferred, combined, compared, and otherwise manipulated in a computer system. It should be borne in mind, however, that all of these and similar terms are to be associated with the appropriate physical quantities and are merely convenient labels applied to these quantities.

Unless specifically stated otherwise as apparent from the following discussions, it is appreciated that throughout the present application, discussions utilizing the terms such as "accessing," "receiving," "sending," "using," "selecting," "determining," "normalizing," "multiplying," "averaging," "monitoring," "comparing," "applying," "updating," "measuring," "deriving" or the like, refer to the actions and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

In the figures, a single block may be described as performing a function or functions; however, in actual practice, the function or functions performed by that block may be performed in a single component or across multiple components, and/or may be performed using hardware, using software, or using a combination of hardware and software. To clearly illustrate this interchangeability of hardware and software, various illustrative components, blocks, modules, circuits, and steps have been described below generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure. Also, the example input devices may include components other than those shown, including well-known components such as a processor, memory and the like.

The techniques described herein may be implemented in hardware, software, firmware, or any combination thereof, unless specifically described as being implemented in a specific manner. Any features described as modules or components may also be implemented together in an integrated logic device or separately as discrete but interoperable logic devices. If implemented in software, the techniques may be realized at least in part by a non-transitory processor-readable storage medium including instructions that, when executed, performs one or more of the methods described above. The non-transitory processor-readable data storage medium may form part of a computer program product, which may include packaging materials.

The non-transitory processor-readable storage medium may comprise random access memory (RAM) such as synchronous dynamic random-access memory (SDRAM), read only memory (ROM), non-volatile random access memory (NVRAM), electrically erasable programmable read-only memory (EEPROM), FLASH memory, other known storage media, and the like. The techniques additionally, or alternatively, may be realized at least in part by a processor-readable communication medium that carries or communicates code in the form of instructions or data structures and that can be accessed, read, and/or executed by a computer or other processor.

The various illustrative logical blocks, modules, circuits and instructions described in connection with the embodiments disclosed herein may be executed by one or more processors (or a processing system). The term "processor," as used herein may refer to any general-purpose processor, special-purpose processor, conventional processor, controller, microcontroller, and/or state machine capable of executing scripts or instructions of one or more software programs stored in memory.

As described above, digital enhanced cordless telecommunications (DECT) ultra low energy (ULE) is a wireless communication standard that can be used to implement home automation, security, and climate control in residential and enterprise environments. Existing versions of the DECT standard require an end-to-end link between a base station and a portable device in order to provide a SUOTA to the portable device. The base station transmits the software update to the portable device via the end-to-end link, and the end-to-end link is not released until the software update is completed. Accordingly, the portable device remains active throughout the establishment of the end-to-end link and the transmission of the software update. Thus, using end-to-end links to provide software updates to a portable device often increases the power consumption of the portable device. Aspects of the present disclosure recognize that the power consumption of portable devices can be reduced by eliminating the requirement for end-to-end links to support SUOTA in a HAN.

Various aspects relate generally to DECT ULE home automation networks (HANs), and more particularly, to techniques for communicating SUOTA without increasing the power consumption of portable devices. In some aspects, SUOTA may be communicated via a ULE extender within the HAN. A ULE range extender may include fixed part (FP) and portable part (PP) components. The FP component is configured to communicate with one or more portable devices, whereas the PP component is configured to communicate with a base station (or another range extender). In some implementations, the PP component may receive a message (also referred to herein as an "instruction") associated with a software update via a first link. The PP component obtains data (e.g., a file or image) associated with the software update, and may release the first link in response to obtaining the software update data. The FP component transmits the message and the software update data to another device (which may be a portable device or another range extender) via a second link and may release the second link upon receiving confirmation that the message and software update data have been received by the other device. In some implementations, the ULE range extender may store the software update data locally and stage the software update data for multiple portable devices.

Particular implementations of the subject matter described in this disclosure can be implemented to realize one or more of the following potential advantages. Providing software updates via ULE range extenders can reduce the power consumption of portable devices in a HAN by eliminating the need for end-to-end links to support transmissions of software updates from a base station to the portable devices. For example, by staging (e.g., storing or buffering) software update data locally on a ULE range extender, aspects of the present disclosure can download the software update data from the base station once and distribute that software update data to multiple connected devices. Accordingly, the ULE extender does not need to establish or maintain links with the base station and the portable device concurrently throughout the SUOTA process. This allows portable devices receiving software updates to return to a low power state more quickly or otherwise reduce the number of transmission attempts for the same software update (compared to software updates via a DECT repeater).

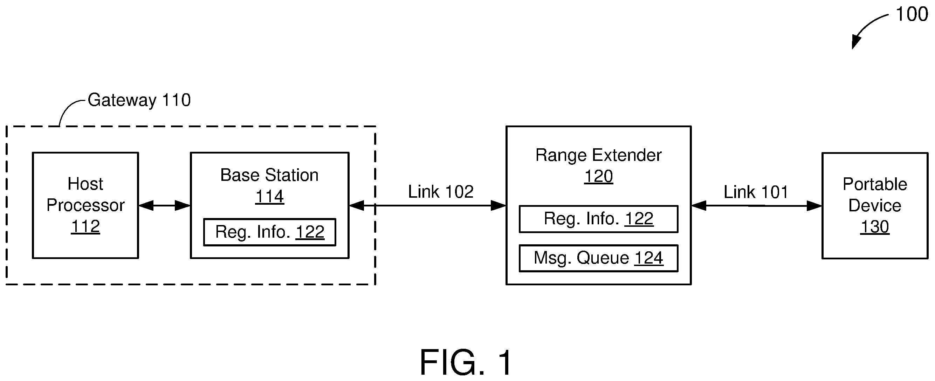

FIG. 1 shows a block diagram of an example wireless communication network 100, according to some implementations. In some aspects, the wireless communication network 100 may be one example of a home automation network (HAN). In such aspects, the network 100 may implement the digital enhanced cordless telecommunications (DECT) ultra low energy (ULE) wireless communication standard. The network 100 includes a gateway 110, a range extender 120, and a portable device 130. For simplicity, only one portable device 130 is shown in FIG. 1. In actual implementations, the network 100 may include multiple portable devices.

The gateway 110 includes a host processor 112 and a base station 114. The base station 114 (also referred to as a "root node") represents a DECT ULE fixed part (FP) of the network 100. More specifically, the base station 114 enables the host processor 112 to communicate with portable devices in the network 100 (such as the portable device 130) over a DECT air interface. For example, the base station 114 may receive uplink messages, via the DECT air interface, from one or more portable devices and provide the received messages to the host processor 112. The base station 114 also may transmit downlink messages, via the DECT air interface, to one or more portable devices on behalf of the host processor 112.

The portable device 130 (also referred to as a "leaf") represents a DECT ULE portable part (PP) of the network 100. As described above, a DECT ULE PP can be any portable device that is used in home automation, security, or climate control applications. Example suitable portable devices may include sensors (such as smoke detectors or motion detectors), thermostats, and electricity control elements, among other examples. The portable device 130 is registered with the base station 114, so that messages can be routed between the base station 114 and the portable device 130. In other words, the base station 114 stores registration information 122 that enables the portable device 130 to communicate with the base station 112 (and thus, the gateway 110) via the DECT air interface. For example, the portable device 130 may transmit and receive messages (also referred to as "information packets"), over the DECT air interface, carrying information associated with the corresponding application.

The range extender 120 is configured to extend the wireless range of the network 100 by forwarding communications between the portable device 130 and the base station 114 (such as when the portable device 130 is beyond the wireless communication range of the base station 114). For example, the portable device 130 may transmit uplink messages over a first wireless communication link 101 with the range extender 120, and the range extender 120 may retransmit the uplink messages over a second wireless communication link 102 with the base station 114. Alternatively, or additionally, the base station 114 may transmit downlink messages over the second wireless communication link 102, and the range extender 120 may retransmit the downlink messages to the portable device 130 over the first wireless communication link 101.

In some implementations, the range extender 120 may register the portable device 130 locally. In other words, the range extender 120 also may store the registration information 122 associated with the portable device 130. The registration information 122 may include any information that is used to register the portable device 130 with the base station 114 (so that messages can be routed between the base station 114 and the portable device 130). By storing such registration information 122 locally, the range extender 120 can serve the portable device 130 in a similar capacity as the base station 114. For example, the range extender 120 may route or otherwise process messages from the portable device 130 based on the registration information 122.

In some implementations, the range extender 120 may include a message queue 124 for storing or buffering uplink messages received from the portable device 130. For example, upon receiving an uplink message 130 from the portable device 130, the range extender 120 may store the uplink message in the message queue 124 until it can transmit the uplink message to the base station 114. This allows the range extender 120 to release the first wireless communication link 101 immediately after (or in response to) receiving the uplink message from the portable device 130. In some implementations, the range extender 120 may release the first wireless communication link 101 before acquiring the second wireless communication link 102. Thus, only one of the wireless communication links 101 or 102 may be active at any given time.

In contrast with existing DECT repeaters (also referred to as "wireless relay stations"), the range extender 120 can facilitate communications between the portable device 130 and the base station 114 without requiring end-to-end links. As a result, the portable device 130 can return to a low power state immediately after sending its message to the range extender 120 (rather than attempting to transmit the same message repeatedly until an end-to-end link is available). Thus, by locally registering the portable device 130 and buffering messages received therefrom, the range extender 120 can extend the wireless communication range of the network 100 (by up to 2500 meters in outdoor environments) while reducing the power consumption of the portable device 130 (by 200-400% compared to a DECT repeater).

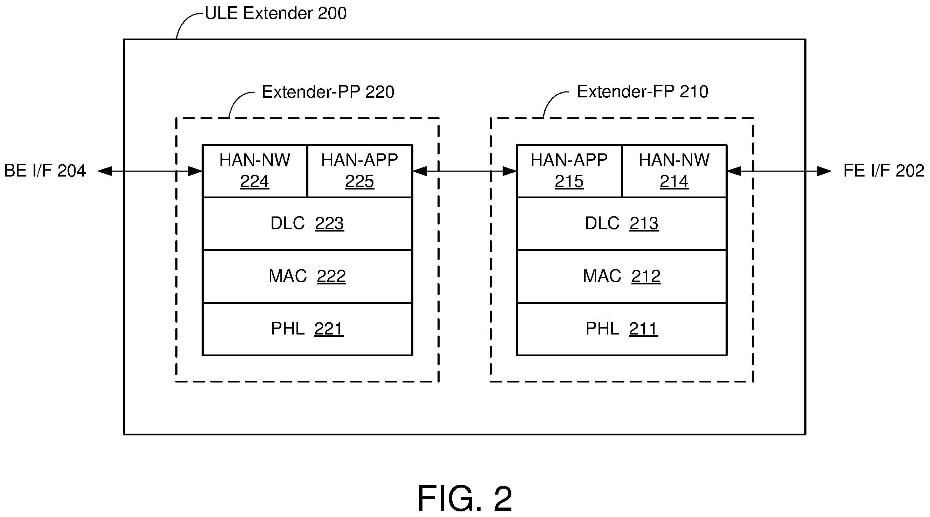

FIG. 2 shows a block diagram of an example DECT ULE range extender 200, according to some implementations. The DECT ULE range extender 200 (also referred to as a "ULE extender") is configured to extend the wireless communication range of a HAN by forwarding messages between a base station and one or more portable devices. In some implementations, the ULE extender 200 may be one example of the range extender 120 of FIG. 1.

The ULE extender 200 includes a fixed-part (FP) component 210 (also referred to as the "extender-FP") and a portable-part (PP) component 220 (also referred to as the "extender-PP"). In some implementations, the extender-FP 210 and the extender-PP 220 may be disposed on separate circuits or chips that are communicably coupled to one another via a wired link (such as any link conforming to the universal asynchronous receiver-transmitter (UART) communication protocols). In some other implementations, the extender-FP 210 and the extender-PP 220 may be disposed on the same circuit or chip.

The extender-FP 210 includes a physical layer (PHL) 211, a medium access control (MAC) layer 212, a data link control (DLC) layer 213, and a HAN layer that includes a network (HAN-NW) sublayer 214 and an application (HAN-APP) sublayer 215. The PHL 211, MAC layer 212, and DLC layer 213 may conform to existing PHL, MAC, and DLC layer protocols, respectively, defined by the DECT ULE standard. In some implementations, the HAN-NW layer 214 may transmit and receive HAN messages over a DECT air interface 202 according to existing HAN layer protocols. The DECT air interface 202 also may be referred to as a frontend DECT air interface (or "FE I/F"). In some implementations, the HAN-APP layer 215 may interface with the extender-PP 220 to route or otherwise process wireless communications through the HAN.

The extender-FP 210 is configured to communicate with portable devices, or other ULE extenders, over the frontend DECT air interface 202. In some aspects, the extender-FP 210 may operate as a DECT FP of the HAN. This allows the extender-FP 210 to serve the portable devices in the same or similar capacity as a base station. For example, in some implementations, the extender-FP 210 may store registration information associated with one or more portable devices (such as the registration information 122 of FIG. 1). In other words, a portable device may register with the extender-FP 210 as it would a base station or root node. As a result of registering a portable device, the extender-FP 210 may route uplink messages from, and downlink messages to, that portable device as if the extender-FP 210 were a base station.

The extender-PP 220 includes a PHL 221, a MAC layer 222, a DLC layer 223, and a HAN layer that includes a HAN-NW sublayer 224 and a HAN-APP sublayer 225. The PHL 221, MAC layer 222, and DLC layer 223 may conform to existing PHL, MAC, and DLC layer protocols, respectively, defined by the DECT ULE standard. In some implementations, the HAN-NW layer 224 may transmit and receive HAN messages over a DECT air interface 204 according to existing HAN layer protocols. The DECT air interface 204 also may be referred to as a backend DECT air interface (or "BE I/F"). In some implementations, the HAN-APP layer 225 may interface with the extender-FP 210 to route or otherwise process wireless communications through the HAN.

The extender-PP 220 is configured to communicate with a base station (also referred to herein as the "main base"), or other ULE extenders, over the backend DECT air interface 204. In some aspects, the extender-PP 220 may operate as a DECT PP of the HAN. This allows the extender-PP 220 to communicate with the main base as if it were a portable device. For example, in some implementations, the extender-PP 220 may store or buffer uplink messages intended for the main base (such as in the message queue 124 of FIG. 1). The uplink messages may originate from portable devices that are registered with the HAN. As such, the extender-PP 220 may attempt to transmit the messages from its message queue to the main base as if the extender-PP 220 were such portable devices.

In some aspects, the HAN-APP sublayer 225 of the extender-PP 220 may coordinate with the HAN-APP sublayer 215 of the extender-FP 210 (such as via UART) to manage a registration of portable devices. In some implementations, the HAN-APP sublayer 215 may pass registration information to the HAN-APP sublayer 225 when a portable device registers (or deregisters) with the extender-FP 210 so that the HAN-NW sublayer 224 can synchronize the device registration with the main base. In some other implementations, the HAN-NW sublayer 224 may receive registration information associated with a portable device (such as when a portable device registers or deregisters with the main base or other ULE extender). The HAN-APP sublayer 225 may pass such registration information to the HAN-APP sublayer 215 so that the HAN-NW sublayer 214 can locally register (or deregister) the portable device.

In some aspects, the HAN-APP sublayer 215 of the extender-FP 210 may coordinate with the HAN-APP sublayer 225 of the extender-PP 220 (such as via UART) to move portable devices to or from the ULE extender 200. In some implementations, the HAN-NW sublayer 224 may receive instructions from the main base indicating that the ULE extender 200 is to serve a portable device that is currently being served by the main base or another ULE extender. In some other implementations, the HAN-NW sublayer 224 may receive instructions from the main base indicating that the ULE extender 200 is to stop serving a particular portable device. The HAN-APP sublayer 225 may pass the instructions to the HAN-APP sublayer 215 so that the HAN-NW sublayer 214 can start or stop communicating with the portable device.

In some aspects, the HAN-APP sublayer 215 of the extender-FP 210 may coordinate with the HAN-APP sublayer 225 of the extender-PP 220 (such as via UART) to manage communications between the main base and one or more portable devices. In some implementations, the HAN-APP sublayer 215 may pass uplink messages received by the HAN-NW sublayer 214 to the HAN-APP sublayer 225 so that the HAN-NW sublayer 224 can retransmit the uplink messages over the backend DECT air interface 204. In some other implementations, the HAN-APP sublayer 225 may pass downlink messages received by the HAN-NW sublayer 224 to the HAN-APP sublayer 215 so that the HAN-NW sublayer 214 can retransmit the downlink messages over the frontend DECT air interface 202.

In some other aspects, the extender-FP 210 may directly route messages between multiple portable devices. For example, because the extender-FP 210 operates as a DECT FP (or base station) for any locally registered portable devices that are within wireless communication range, the extender-FP 210 can route messages between such devices based on the registration information stored therein (and without communicating with the extender-PP 220 or the main base). This allows faster routing of messages between portable devices in relatively close proximity.

A device may use software to perform various functions, including executing instructions and/or controlling hardware devices. As used herein, "software" may include application programs, operating systems, firmware, programming for programmable logic devices, and related data (e.g., look-up tables, libraries, etc.). Software within a device may need to be updated (e.g., overwritten or otherwise replaced) with a different version, for example, to remedy bugs and/or add or remove functionality. A version of the software, which may include any number of differences versus another version of the software, may be identified by a version identifier (e.g., a version number) associated with the software. A software update may be distributed in any combination of one or more files, one or more disk images, and/or the like. Updates for different software may be distributed together (e.g., in a collection of files or in a disk image that includes updates for multiple applications). It should be appreciated, however, that "updating" software, as used herein, more generally encompasses replacing software with a different version, whether that different version is a previous version (e.g., regressing to a previous version to undo certain changes to the software) or a later version.

Within a HAN, a base station may provide software updates to one or more portable devices. A device may perform an update process to update its software with a replacement version distributed by the base station. The base station may distribute a software update to a portable device by first transmitting a message (e.g., instructions) to the portable device. The message notifies the portable device that certain software at the portable device is to be updated. The base station also transmits the updated software data (e.g., files, disk image, etc.) to the portable device. When a portable device is within communication range of the base station, the base station may establish a link with the portable device and transmit the message and the software update data to the portable device via that link. For a portable device that is beyond the communication range of the base station, the base station may distribute software updates to that portable device via a ULE range extender.

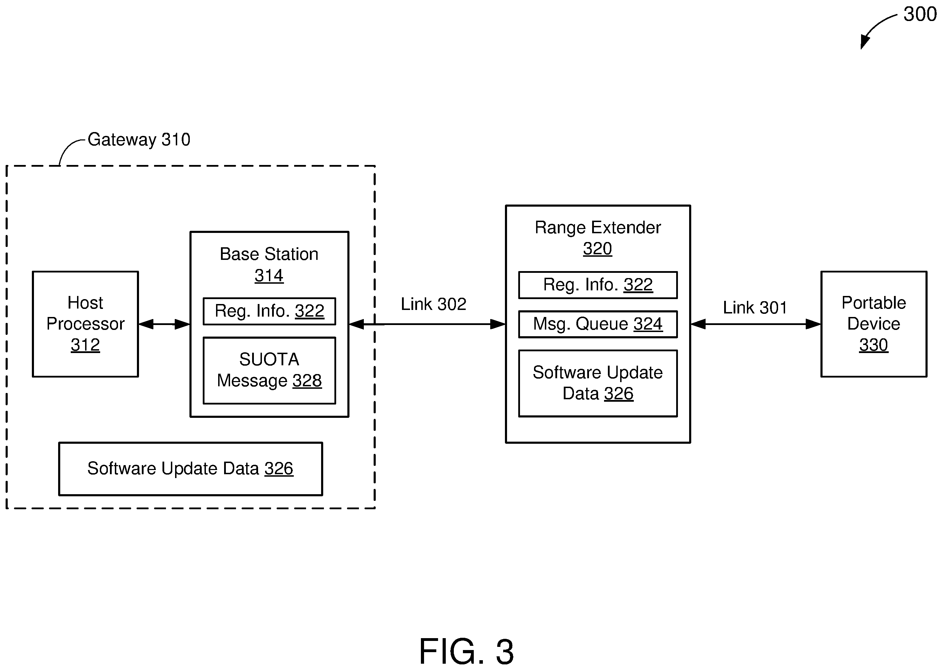

FIG. 3 shows a block diagram of another example wireless communication network 300, according to some implementations. In some implementations, the wireless communication network 300 may be one example of the wireless communication network 100 of FIG. 1. The network 300 includes a gateway 310, a range extender 320, and a portable device 330, which may be examples of the gateway 110, range extender 120, and portable device 130, respectively.

The base station 314 may distribute software update data 326 for any number of software updates. In some implementations, a memory (e.g., volatile or non-volatile memory or storage) of the gateway 310 may store the software update data 326 to be distributed by the base station 314. The software update data 326 may include one or more files or images that may be provided to a portable device.

To distribute a software update to a portable device 330, the host processor 312 may generate a HAN functional (FUN) message 328 directing the portable device 330 to perform a software update. In some implementations, this HAN FUN message 328 (hereinafter a "SUOTA message") may include information identifying the message 328 as a SUOTA message, an identifier of the portable device 330 that is the target device of the SUOTA message, an identifier (e.g., name) of the software update data 326 (e.g., the file(s) or image(s)) for the software update, and an identifier of the version (e.g., version number) of the software included in the software update. In some implementations, the SUOTA message 328 may include instructions to the portable device 330 to perform a software update using the identified software update data and version. The base station 314 may determine, based on the registration info 322, that the portable device 330 is being served by a range extender 320. Thus, the base station 314 establishes a link 302 with the range extender 320 and transmits the SUOTA message 328 to the range extender 320 over the link 302. In some implementations, the range extender 320 may release the link 302 in response to receiving the SUOTA message 328.

In some implementations, the range extender 320 may receive the SUOTA message 328 prior to receiving the software update data 326. In such implementations, the range extender 320 may retrieve the software update data 326 from the base station 314 over the link 302. In some implementations, where the range extender 320 releases the link 302 in response to receiving the SUOTA message 328, the range extender 320 may re-establish the link 302 for purposes of retrieving the software update data 326. After retrieving the software update data 326, the range extender 320 stores the software update data 326 in a local memory or storage (hereinafter collectively referred to as "local memory"). The range extender 302 may release the link 302 in response to receiving the software update data 326.

In some other implementations, the range extender 320 may receive the SUOTA message 328 after receiving the software update data 326 (e.g., in response to a prior SUOTA message) and storing the software update data 326 in the local memory. In this case, the range extender 320 may retrieve the software update data 326 from the local memory and release the link 302. In some implementations, the range extender 320 may transmit a message to the base station 314 confirming that the range extender 320 has already received the software update data 326 prior to releasing the link 302. In some implementations, where the range extender 320 releases the link 302 in response to receiving the SUOTA message 328, the range extender 320 may re-establish the link 302 for purposes of transmitting the message confirming that the range extender 320 already has the software update data 326.

In some implementations, in response to receiving the SUOTA message 328, the range extender 320 may queue the message in a message queue 324 while the software update data 326 is being retrieved from the local memory or from the base station 314. In some implementations, the message queue 324 may be an example of the message queue 124 of FIG. 1.

The range extender 320 may establish a link 301 with the portable device 330 and transmit the SUOTA message 328 and the software update data 326 to the portable device 330. The range extender 320 may release the link 301 in response to completion of the transmission of the SUOTA message 328 and the software update data 326. The portable device 330 may apply the software update data 326 in response to receiving the SUOTA message 328.

In various implementations, by storing the software update data 326 locally, the range extender 320 may release the link 302 between the base station 314 and the range extender 320 before acquiring the link 301 with the portable device 330. Further, the range extender 320 may stage the software update data 326 for additional portable devices. For example, the range extender 320 may receive a subsequent SUOTA message for a second portable device that identifies the stored software update data 326 for the software update. Responsive to that SUOTA message, the range extender 320 may transmit the locally stored software update data 326 to the second portable device, without having to re-retrieve the software update data 326 from the base station 314.

Accordingly, in contrast with existing DECT repeaters (also referred to as "wireless relay stations"), the range extender 320 can facilitate the distribution of software updates from the base station 314 to the portable device 330 without requiring end-to-end links. Without the end-to-end link between the base station 314 and the portable device 330, the portable device 330 need not remain active while waiting for the entire end-to-end link to be established. Instead, the link between the range extender 320 and the portable device 330 may be established independently of, and non-concurrently with, the link between the range extender 320 and the base station 314. As a result, the portable device 330 may be in a low power state for a longer amount of time. Additionally, fewer link resources (e.g., available channels for links) may be consumed at any given time, as concurrent links from the range extender to the base station and portable device, respectively, are not needed. Thus, by staging the software update data 326 at the range extender 320, the range extender 320 can extend the reach of software updates within the network 300 while reducing the power consumption of the portable device 330.

While FIG. 3 illustrates a network 300 that includes one range extender 320 and one portable device 330 downlink from the range extender 320, it should be appreciated that the network 300 may include any number of range extenders. Each range extender may receive a software update via a direct link with the base station 314 (e.g., multiple range extenders that can communicate the base station 314 in parallel via respective wireless communication links) or via a link with another range extender (e.g., two range extenders coupled in series, a daisy chain of range extenders) acting as an intermediary for the base station 314. Further, a range extender 320 may communicate with any number of portable devices 330 via respective wireless communication links.

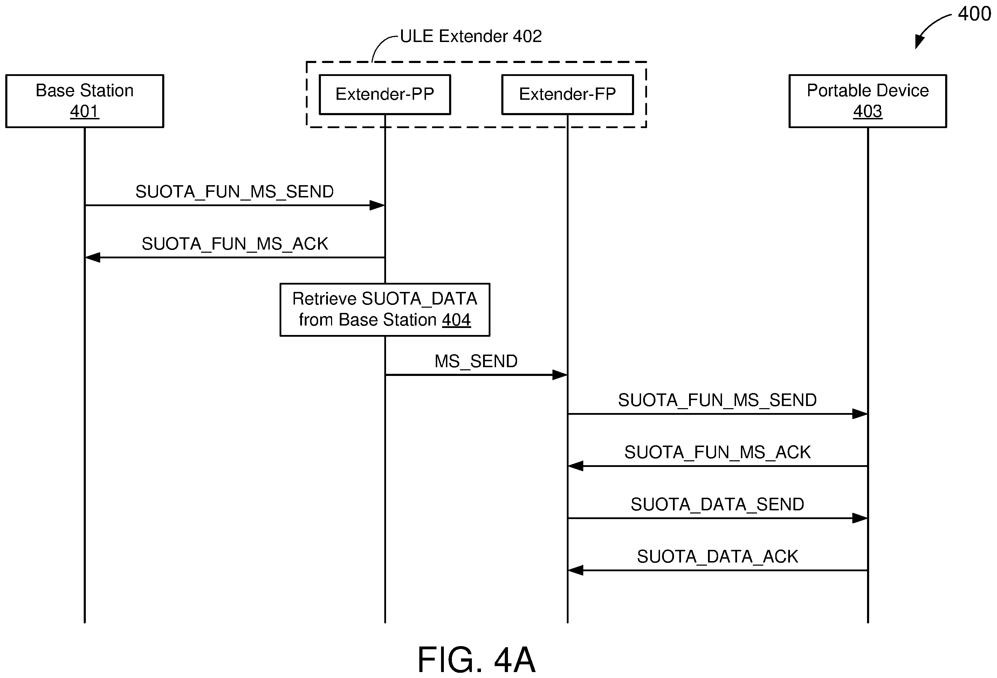

FIGS. 4A-4C show sequence diagrams 400, 410, and 420 depicting an example process for distributing a software update in a home automation network (HAN), according some implementations. The HAN includes a base station 401 (also referred to as the "main base") and a ULE extender 402. In some implementations, the HAN may be one example of the HAN 300 of FIG. 3. With reference to FIG. 3, the base station 401 may be one example of the base station 314 and the ULE extender 402 may be one example of the range extender 320.

The ULE extender 402 further includes an extender-FP and an extender-PP. In some implementations, the ULE extender 402 may be one example of the ULE extender 200 of FIG. 2. With reference to FIG. 2, the extender-FP may be one example of the extender-FP 210 and the extender-PP may be one example of the extender-PP 220. More specifically, the extender-FP may operate as a DECT FP configured to communicate with one or more portable devices, whereas the extender-PP may operate as a DECT PP configured to communicate with a base station.

The HAN further includes a portable device 403. The portable device 403 may be one example of the portable device 330 of FIG. 3. The portable device 403 is registered with the base station 401 and with the ULE extender 402. Examples of device registration, as well as transmission of uplink and downlink messages, via ULE range extenders are described in U.S. Patent Application No. 18/457,997, titled "RANGE EXTENDER FOR HOME AUTOMATION NETWORK," and filed on August 29, 2023, which is incorporated by reference herein in its entirety.

In some implementations, a range extender may receive the software update data after receiving a SUOTA message associated with the software update data. In the example of FIG. 4A, the base station 401 distributes a software update to the portable device 403. Thus, the base station 401 acquires or otherwise establishes a wireless communication link with the ULE extender 402 and transmits a SUOTA HAN functional (FUN) message (SUOTA_FUN_MS_SEND) (e.g., SUOTA message 328) to the ULE extender 402. A SUOTA FUN message may include information indicating that the FUN message is a SUOTA message (e.g., a message type identifier), a device identifier of the target portable device, a version identifier associated with the software update data (e.g., the file version or the version of a program to be updated), and an identifier of the software update data (e.g., a file or image name). The SUOTA FUN message includes instructions to the portable device 403 to perform a software update using the indicated software update data.

The extender-PP receives the SUOTA FUN message from the base station 401. The extender-PP may determine that the FUN message is a SUOTA message and may buffer the SUOTA FUN message. The extender-PP may notify the base station 401 that the SUOTA FUN message has been received by the ULE extender 402 by transmitting an acknowledgment message (SUOTA_FUN_MS_ACK) to the base station 401. In some implementations, the extender-PP may release the link between the ULE extender 402 and the base station 401 in response to receiving the SUOTA FUN message, after transmitting the SUOTA_FUN_MS_ACK message.

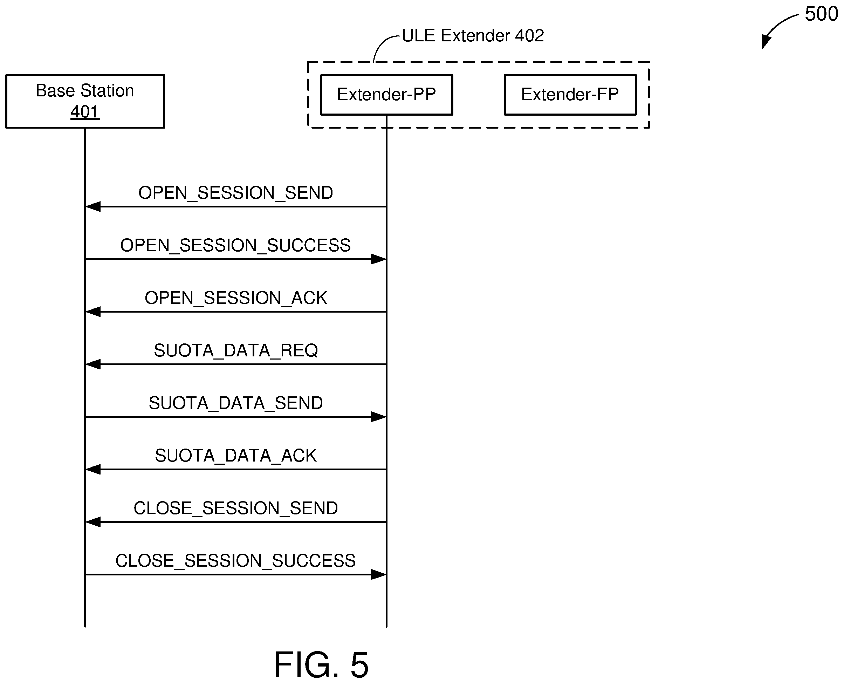

The extender-PP may determine that the software update data (SUOTA_DATA) indicated in the SUOTA message (e.g., a file and version matching the file name and version identifier, respectively, included in the SUOTA FUN message) is not available in local memory. Thus, the extender-PP may retrieve 404 the SUOTA_DATA (e.g., software update data 326) from the base station 401 and store the retrieved SUOTA_DATA in a local memory. A sequence for retrieving the SUOTA_DATA from the base station 401 is described below with reference to FIG. 5. In some implementations, the extender-PP may re-establish the link between the ULE extender 402 and the base station 401 for purposes of retrieving the SUOTA_DATA.

The extender-PP may then forward the SUOTA FUN message, and the SUOTA_DATA, to the extender-FP (MS_SEND). Alternatively, the extender-PP may forward the SUOTA FUN message (MS_SEND) to the extender-FP, and the extender-FP may retrieve the SUOTA_DATA from the local memory. The extender-PP may release the link between the ULE extender 402 and the base station 401 after retrieving the SUOTA_DATA from the base station 401.

The extender-FP identifies the target portable device 403 from the information included in the SUOTA FUN message. The extender-FP acquires or otherwise establishes a wireless communication link with the portable device 403, and transmits the SUOTA FUN message (SUOTA_FUN_MS_SEND) and the SUOTA_DATA (SUOTA_DATA_SEND) over the link to the portable device 403. The portable device 403 may transmit acknowledgement messages confirming receipt of the SUOTA FUN message (SUOTA_FUN_MS_ACK) and the SUOTA_DATA (SUOTA_DATA_ACK) to the extender-FP. In some implementations, the portable device 403 may transmit a single acknowledgement message confirming receipt of both the SUOTA FUN message and the SUOTA_DATA.

The extender-FP may release the link between the ULE extender 402 and the portable device 403 after receiving the acknowledgement(s). In some implementations, the extender-FP may provide a response to the extender-PP indicating that the SUTOA FUN message and the SUOTA_DATA have been transmitted to the portable device 403 based on the received acknowledgement message(s), and the extender-PP may transmit a message to the base station 401 indicating that the SUOTA FUN message and the SUOTA_DATA have been received by the portable device 403. The portable device 403 may apply the SUOTA_DATA as indicated by the SUOTA FUN message.

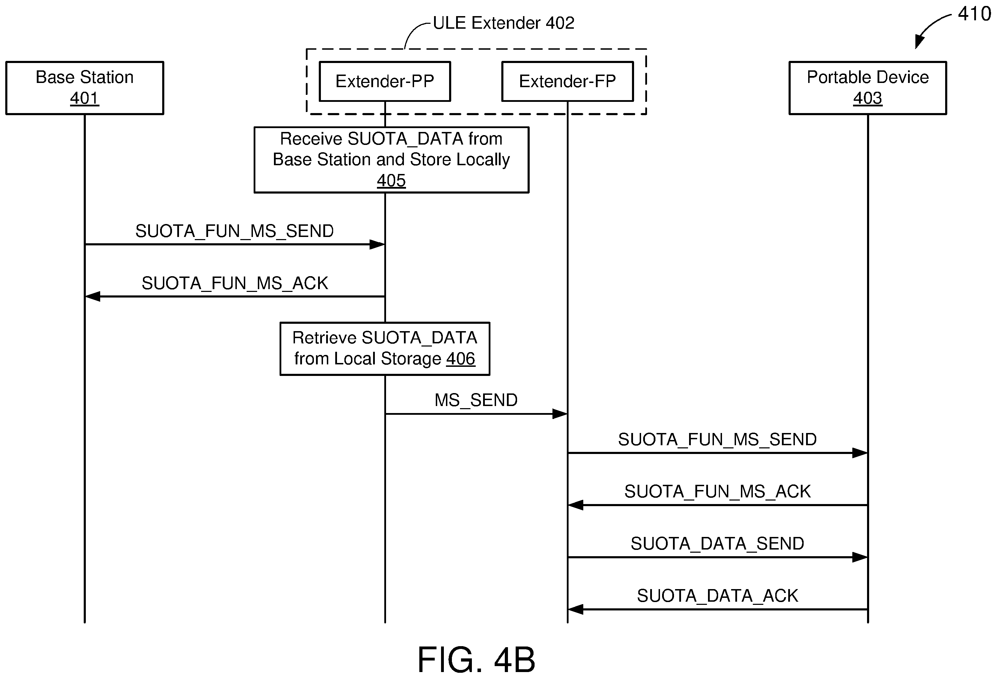

In some implementations, a range extender may receive the software update data before receiving a SUOTA message associated with the software update data. For example, the range extender may have retrieved the SUOTA_DATA from a base station in response to a first SUOTA FUN message to a first target portable device, and subsequently receive a second SUOTA FUN message to a second target portable device indicating the same SUOTA_DATA. In the example of FIG. 4B, the extender-PP retrieves 405 SUOTA_DATA from the base station 401 (e.g., in response to a prior SUOTA FUN message to another target portable device) and stores the retrieved SUOTA_DATA in a local memory, similar to that described above with reference to FIG. 4A.

The base station 401 distributes the software update to the portable device 403. Thus, the base station 401 acquires or otherwise establishes a wireless communication link with the ULE extender 402 and transmits a SUOTA HAN functional (FUN) message (SUOTA_FUN_MS_SEND) to the ULE extender 402. The SUOTA FUN message includes instructions to the portable device 403 to perform a software update using the indicated software update data.

The extender-PP receives the SUOTA FUN message from the base station 401. The extender-PP may determine that the FUN message is a SUOTA message and may buffer the SUOTA FUN message. The extender-PP may notify the base station 401 that the SUOTA FUN message has been received by the ULE extender 402 by transmitting an acknowledgment message (SUOTA_FUN_MS_ACK) to the base station 401. In some implementations, the extender-PP may release the link between the ULE extender 402 and the base station 401 in response to receiving the SUOTA FUN message, after transmitting the SUOTA_FUN_MS_ACK message.

The extender-PP may determine that the software update data (SUOTA_DATA) indicated in the SUOTA message (e.g., a file and version matching the file name and version identifier, respectively, included in the SUOTA FUN message) is available in local memory. Thus, the extender-PP may retrieve 406 the SUOTA_DATA from the local memory. In some implementations, the extender-PP may transmit a message to the base station 401 confirming that the extender-PP already has already received the SUOTA_DATA, and may release the link between the ULE extender 402 and the base station 401 in response to transmitting such message. In some implementations, where the link between the ULE extender 402 and the base station 401 has already been released, the extender-PP may re-establish the link between the ULE extender 402 and the base station 401 for purposes of transmitting the message confirming the SUOTA_DATA.

The extender-PP may then forward the SUOTA FUN message, and the SUOTA_DATA from the local memory, to the extender-FP (MS_SEND). Alternatively, the extender-PP may forward the SUOTA FUN message (MS_SEND) to the extender-FP, and the extender-FP may retrieve the SUOTA_DATA from the local memory. The extender-PP may release the link between the ULE extender 402 and the base station 401 after retrieving the SUOTA_DATA from the local memory.

The extender-FP identifies the target portable device 403 from the information included in the SUOTA FUN message. The extender-FP acquires or otherwise establishes a wireless communication link with the portable device 403, and transmits the SUOTA FUN message (SUOTA_FUN_MS_SEND) and the SUOTA_DATA (SUOTA_DATA_SEND) over the link to the portable device 403. The portable device 403 may transmit acknowledgement messages confirming receipt of the SUOTA FUN message (SUOTA_FUN_MS_ACK) and the SUOTA_DATA (SUOTA_DATA_ACK) to the extender-FP. In some implementations, the portable device 403 may transmit a single acknowledgement message confirming receipt of both the SUOTA FUN message and the SUOTA_DATA.

The extender-FP may release the link between the ULE extender 402 and the portable device 403 after receiving the acknowledgement(s). In some implementations, the extender-FP may provide a response to the extender-PP indicating that the SUTOA FUN message and the SUOTA_DATA have been transmitted to the portable device 403 based on the received acknowledgement message(s), and the extender-PP may transmit a message to the base station 401 indicating that the SUOTA FUN message and the SUOTA_DATA have been received by the portable device 403. The portable device 403 may apply the SUOTA_DATA as indicated by the SUOTA FUN message.

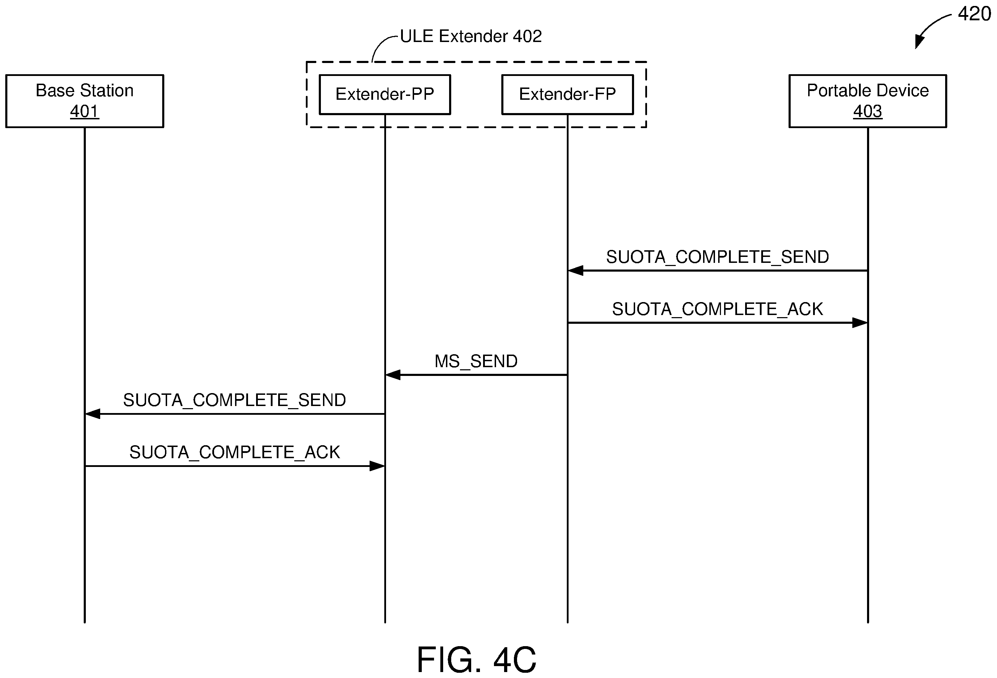

With reference to FIG. 4C, after successful completion of the software update as described above with reference to FIG. 4A or 4B, the portable device 403 may acquire or otherwise establish a wireless communication link with the ULE extender 402 and transmit a FUN message indicating completion of the software update (SUOTA_COMPLETE_SEND) over the link to the extender-FP. The extender-FP may transmit an acknowledgement message (SUOTA_COMPLETE_ACK) acknowledging receipt of the completion message. The portable device 403 may release the link between the portable device 403 and the ULE extender 402 in response to receiving the acknowledgement. The extender-FP may forward the completion message (MS_SEND) to the extender-PP, which may buffer the completion message for sending to the base station 401. The extender-PP may transmit the completion message (SUOTA_COMPLETE_ACK) to the base station 401, which may transmit an acknowledgement message (SUOTA_COMPLETE_ACK) to the extender-PP. In response to receiving the acknowledgement, the extender-PP may release the link between the base station 401 and the ULE extender 402, and the base station 401 may update the registration information for the portable device 403 to indicate that the portable device 403 is using the updated software.

In some aspects, the wireless communication range of a HAN can be extended further by implementing multiple ULE extenders (such as in a daisy chain configuration). In other words, the extender-FP of a first ULE extender in a daisy chain may be configured to communicate with the extender-PP of a second ULE extender in the daisy chain. Because each ULE extender operates as both a DECT FP and a DECT PP, daisy chaining multiple ULE extenders between a portable device and a base station does not increase the overhead or power consumption of the portable device compared to the single ULE extender implementation (since the portable device does not require an end-to-end link to communicate with the base station). Accordingly, a SUOTA FUN message and corresponding SUOTA_DATA may be transmitted over the daisy chain of ULE extenders to a target portable device at the end of the daisy chain using iterations of the sequence 300 described above.

FIG. 5 shows a sequence diagram 500 depicting an example process for retrieving software update data from a base station, according to some implementations. In response to determining that the SUOTA_DATA indicated in a SUOTA FUN message is not available in local memory, the extender-PP may proceed to retrieve the SUOTA_DATA from the base station 401.

After determining that the SUOTA_DATA is to be retrieved from the base station 401 (e.g., the SUOTA_DATA is not available in the local memory), the extender-PP transmits a request, over a link with the base station 401, to initiate a session for downloading software update data (OPEN_SESSION_SEND). The base station 401 accepts the request to initiate the session and transmits a message to the extender-PP indicating that the session has been successfully initiated (OPEN_SESSION_SUCCESS). The extender-PP may transmit an acknowledgement of the initiated session (OPEN_SESSION_ACK) in response to receiving the OPEN_SESSION_SUCCESS message.

After the base station 401 initiates the session, the extender-PP transmits a message to the base station 401 requesting the SUOTA_DATA (SUOTA_DATA_REQ). In some implementations, the extender-PP may download, and store in a local memory, the SUOTA_DATA in chunks or portions (e.g., as a data chunk). In such implementations, the SUOTA_DATA_REQ may be a request for a given portion of the SUOTA_DATA. By downloading and storing the SUOTA_DATA in portions, the extender-PP may not need to re-download any portions of the SUOTA_DATA already received from the base station 401 if the download session is interrupted (e.g., the base station 401 and/or the ULE extender 402 suffered a failure and had to reboot, the link was disrupted by wireless interference).

In response to receiving the SUOTA_DATA_REQ, the base station 401 transmits the requested SUOTA_DATA (or a portion thereof) to the extender-PP (SUOTA_DATA_SEND), and the extender-PP may store the received SUOTA_DATA (or any portion thereof) in a local memory. The extender-PP transmits an acknowledgement message (SUOTA_DATA_ACK) confirming receipt of the received SUOTA_DATA. If there are additional portions of the SUOTA_DATA to be downloaded, the extender-PP may transmit a SUOTA_DATA_REQ for the next portion.

When the SUOTA_DATA is downloaded and stored in the local memory, the extender-PP may transmit a FUN message to the base station 401 to end the SUOTA_DATA download session (CLOSE_SESSION_SEND). In response to receiving the CLOSE_SESSION_SEND, the base station 401 ends the session and transmits a message to the extender-PP indicating that the session has been successfully ended (CLOSE_SESSION_SUCCESS). After the base station 401 ends the session, the extender-PP may release the link between the base station 401 and the ULE extender 402.

In some implementations, a portable device 403 may transmit an uplink message, via any number of ULE extenders, to inform the base station 401 of the current software version at the portable device 403 or to request a software update. The base station 401 may respond to the uplink message by distributing a software update to the portable device 403 (such as described with reference to FIG. 4A or 4B).

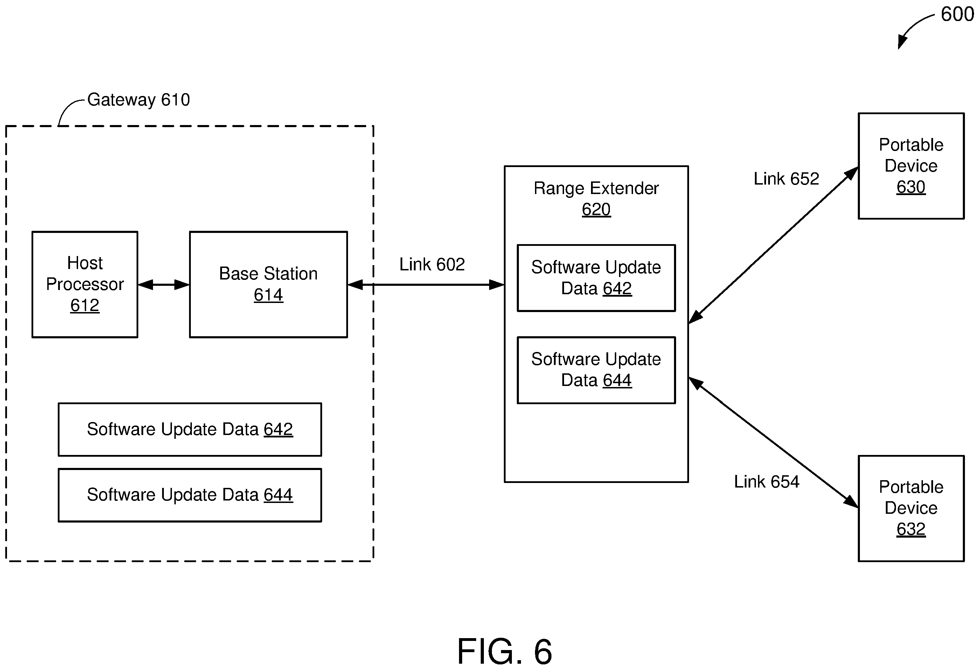

FIG. 6 shows a block diagram of another example wireless communication network 600, according to some implementations. In some implementations, the wireless communication network 600 may be one example of the wireless communication network 100 of FIG. 1 or the wireless communication network 300 of FIG. 3. The network 600 includes a gateway 610, a range extender 620, and portable devices 630 and 632, which may be examples of the gateway 110/310, range extender 120/320, and portable device 130/330, respectively. The gateway 610 includes a host processor 612 and a base station 614, which may be examples of host processor 112/312 and base station 114/314, respectively.

In some implementations, a ULE range extender may stage multiple software updates. The base station 614 may transmit first and second SUOTA messages and respective associated software update data 642 and 644 to the range extender 620 over a link 602, in a manner similar to the processes described above with reference to FIGS. 3-5. The range extender 620 may store the data 642 and 644 in a local memory. The software update data 642 and 644 may respectively include updates corresponding to different software (e.g., multiple applications, firmware, etc.) or different versions of the same software (e.g., multiple versions of an application), to be distributed to respective portable devices. The range extender 620 may transmit the first SUOTA message and the associated software update data 642 to a portable device 630 over a link 652, and the second SUOTA message and the associated software update data 644 to a portable device 632 over a link 654.

Further, in some implementations, a ULE range extender may establish links with different portable devices using different protocols. For example, the portable device 630 may communicate with the base station 614 using DECT ULE protocols, whereas the portable device 632 may communicate with the base station 614 using another communication protocol (other than DECT ULE). Example suitable communication protocols include standards promulgated by the Bluetooth^{®} Special Interest Group (SIG) (such as Bluetooth Low Energy (BLE)), the Institute of Electrical and Electronics Engineers (IEEE) (such as Wi-Fi), and the 3^{rd} Generation Partnership Project (3GPP) (such as 5G New Radio (NR)), among other examples. In some implementations, the link 652 may be a DECT ULE link, and the link 654 may be BLE link. The range extender 620 may transmit the same or different software update data to the portable devices 630 and 632 over links 652 and 654, respectively. In some implementations, the range extender 620 may perform SUOTA for the portable devices 630 and 632 in parallel (e.g., transmitting SUOTA messages and software update data to the portable devices 630 and 632 concurrently).

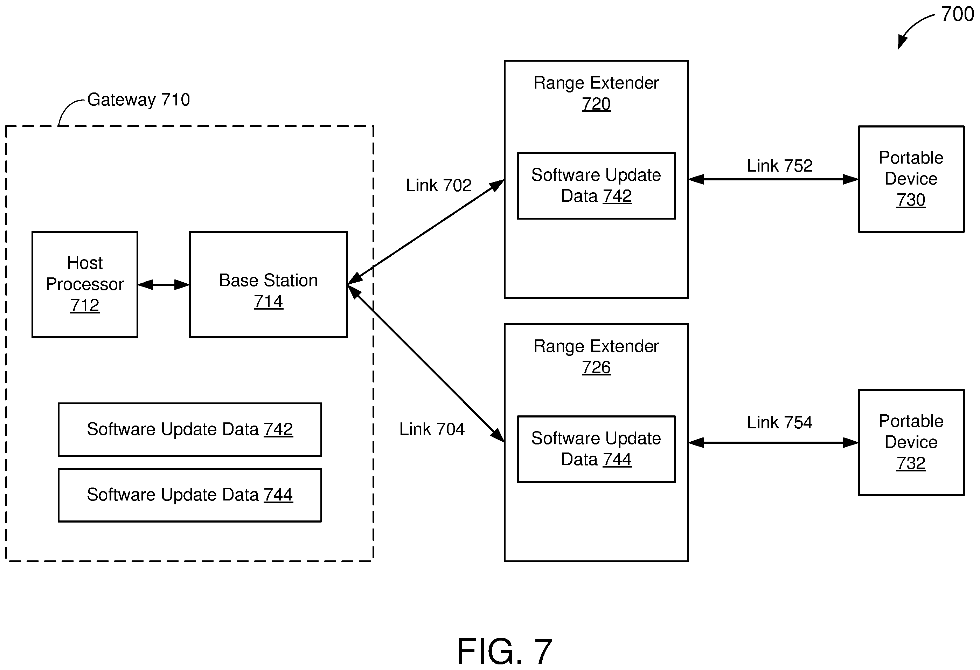

FIG. 7 shows a block diagram of another example wireless communication network 700, according to some implementations. In some implementations, the wireless communication network 700 may be one example of the wireless communication network 100 of FIG. 1 or the wireless communication network 300 of FIG. 3. The network 700 includes a gateway 710, range extenders 720 and 726, and portable devices 730 and 732, which may be examples of the gateway 110/310, range extender 120/320, and portable device 130/330, respectively. The gateway 710 includes a host processor 712 and a base station 714, which may be examples of host processor 112/312 and base station 114/314, respectively.

In some implementations, multiple ULE range extenders may stage respective software updates. For example, the base station 714 may transmit a first SUOTA message and associated software update data 742, over a link 702, to a range extender 720 and may transmit a second SUOTA message and associated software update data 744, over a link 704, to a range extender 726 (such as described with reference to FIGS. 3-5). The range extenders 720 and 726 may store the software update data 742 and 744, respectively, in local memory. The software update data 742 and 744 may be associated with different software (e.g., multiple applications, firmware, etc.) or different versions of the same software (e.g., multiple versions of an application), to be distributed to respective portable devices.

The range extender 720 may transmit the first SUOTA message and the software update data 742, over a link 752, to a portable device 730. Likewise, the range extender 726 may transmit the second SUOTA message, and the software update data 744, to a portable device 732 over a link 754. In some implementations, the range extenders 720 and 726 may transmit the first and second SUOTA messages, and the software update data 742 and 744, concurrently. In some implementations, the portable device 730 may communicate with the range extender 720 using DECT ULE protocols, and the portable device 732 may communicate with the range extender 726 using another communication protocol (other than DECT ULE). Accordingly, the range extender 720 may acquire or otherwise establish a link 752 with the portable device 730 in accordance with the DECT ULE standard. In some implementations, the range extender may acquire or otherwise establish a link 754 with the portable device 732 in accordance with another protocol (e.g., BLE, etc.).

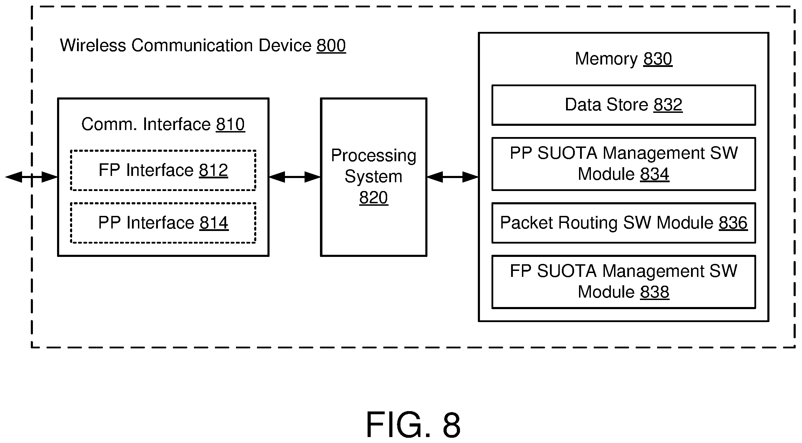

FIG. 8 shows a block diagram of an example wireless communication device 800, according to some implementations. The wireless communication device 800 is configured to extend the wireless communication range of a HAN, including the range of software update distribution within the HAN. In some implementations, the wireless communication device 800 may be one example of the range extender 120 of FIG. 1, the ULE extender 200 of FIG. 2, the range extender 320 of FIG. 3, the ULE extender 402 of FIGS. 4A-4C and 5, the range extender 620 of FIG. 6, or the range extender 720 or 726 of FIG. 7.

The wireless communication device 800 includes a communication interface 810, a processing system 820, and a memory 830. The communication interface 810 is configured to communicate with one or more devices in the HAN. In some aspects, the communication interface 810 may include a fixed part (FP) interface 812 to communicate with one or more portable devices (or ULE extenders) and a portable part (PP) interface 814 to communicate with a base station (or other ULE extenders). In some implementations, the communication interface 810 may include FP and PP interfaces to communicate with portable devices, range extenders, and/or base stations that communicate using standards other than DECT ULE (e.g., using the BLE standard).

The memory 830 may include a data store 832 to store any data needed to facilitate communications, including distribution of software updates, between a base station and a portable device. In some implementations, the data store 832 may be configured to store registration information associated with one or more portable devices. In some other implementations, the data store 832 may be configured to store or buffer information packets (e.g., uplink and/or downlink messages, software update data) received from one or more portable devices and/or the base station. Further, the data store 832 may be configured to store software update data for staging to one or more portable devices.

The memory 830 also may include a non-transitory computer-readable medium (including one or more nonvolatile memory elements, such as EPROM, EEPROM, Flash memory, or a hard drive, among other examples) that may store at least the following software (SW) modules:
- a PP SUOTA management SW module 834 to receive instructions associated with a first software via a first link with a first device, obtain data associated with the first software update, and release the first link responsive to obtaining the data associated with the first software update;
- a SUOTA routing SW module 836 to transmit the instructions and the data associated with the first software update to a second device via a second link; and
- a FP SUOTA management SW module 838 to receive confirmation of the instructions and the data associated with the first software update by the second device and release the second link responsive to receiving the confirmation by the second device.
Each software module includes instructions that, when executed by the processing system 820, causes the wireless communication device 800 to perform the corresponding functions.

The processing system 820 may include any suitable one or more processors capable of executing scripts or instructions of one or more software programs stored in the wireless communication device 800 (such as in the memory 830). For example, the processing system 820 may execute the PP SUOTA management SW module 834 to receive instructions associated with a first software via a first link with a first device, obtain data associated with the first software update, and release the first link responsive to obtaining the data associated with the first software update. The processing system 820 also may execute the SUOTA routing SW module 836 to transmit the instructions and the data associated with the first software update to a second device via a second link. Further, the processing system 820 may execute the FP SUOTA management SW module 838 to receive confirmation of the instructions and the data associated with the first software update by the second device and release the second link responsive to receiving the confirmation by the second device.

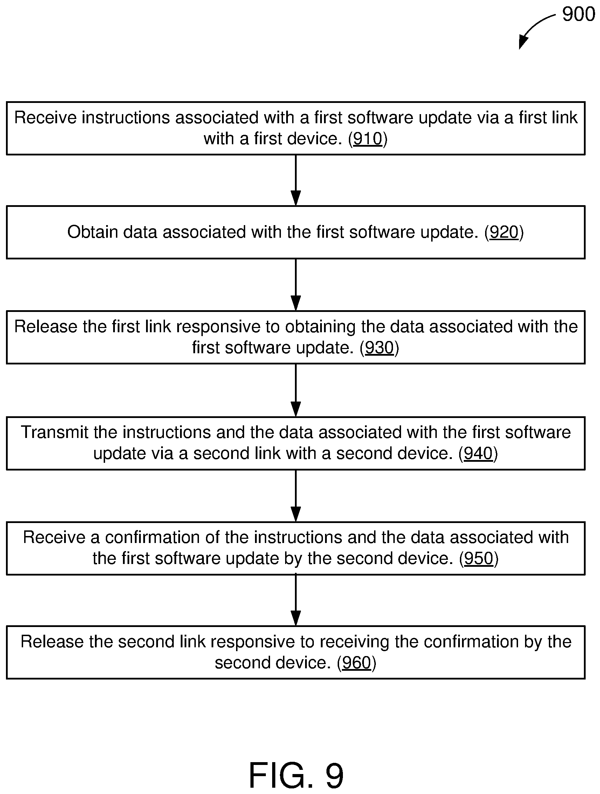

FIG. 9 shows an illustrative flowchart depicting an example operation 900 for providing a software update, according to some implementations. In some implementations, the example operation 900 may be performed by a wireless communication device such as the range extender 120 of FIG. 1, the ULE extender 200 of FIG. 2, the range extender 320 of FIG. 3, the ULE extender 402 of FIGS. 4A-4C and 5, the range extender 620 of FIG. 6, the range extender 720 or 726 of FIG. 7, or the wireless communication device 800 of FIG. 8.

The wireless communication device may receive instructions associated with a first software update via a first link with a first device (910). The wireless communication device may obtain data associated with the first software update (920). The wireless communication device may release the first link responsive to obtaining the data associated with the first software update (930). The wireless communication device may transmit the instructions and the data associated with the first software update via a second link with a second device (940). The wireless communication device may receive confirmation of the instructions and the data associated with the first software update by the second device (950). The wireless communication device may release the second link responsive to receiving the confirmation by the second device (960).

In some implementations, the obtaining of the data associated with the first software update may include determining that the data associated with the first software update is stored in a local memory associated with the wireless communication device, and retrieving the data associated with the first software update from the local memory.

In some implementations, the obtaining of the data associated with the first software update may include retrieving the data associated with the first software update from the first device via the third link.

In some implementations, the first device may include a base station representing a digital enhanced cordless telecommunications (DECT) ultra low energy (ULE) fixed part (FP) of a home automation network (HAN).

In some implementations, the wireless communication device may include a first range extender operating as a first DECT ULE FP and a first DECT ULE portable part (PP) in a HAN.

In some implementations, the second device represents a second DECT ULE PP of the HAN. In some other implementations, the second device may include a second range extender operating as a second DECT ULE FP and a second DECT ULE PP in the HAN.

In some implementations, the wireless communication device may further receive instructions associated with a second software update from the first device, obtain data associated with the second software update, transmit the instructions and the data associated with the second software update via a third link with a third device, receive confirmation of the instructions and the data associated with the second software update by the third device; and release the third link responsive to receiving the confirmation by the third device.

In some implementations, the first software update is associated with a different software version than the second software update. In some implementations, the first software update is associated with a different software than the second software update.

In some implementations, the wireless communication device communicates with the second device according to a first communication protocol and communicates with the third device according to a second communication protocol different than the first communication protocol. In some implementations, the first communication protocol comprises a DECT ULE communication protocol, and the second communication protocol comprises a communication protocol other than DECT ULE.

Those of skill in the art will appreciate that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Further, those of skill in the art will appreciate that the various illustrative logical blocks, modules, circuits, and algorithm steps described in connection with the aspects disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the disclosure.

The methods, sequences or algorithms described in connection with the aspects disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor.

In the foregoing specification, embodiments have been described with reference to specific examples thereof. It will, however, be evident that various modifications and changes may be made thereto without departing from the broader scope of the disclosure as set forth in the appended claims. The specification and drawings are, accordingly, to be regarded in an illustrative sense rather than a restrictive sense.

## Claims

1. A method for providing a software update by a wireless communication device, comprising:
receiving instructions associated with a first software update via a first link with a first device;
obtaining data associated with the first software update;
releasing the first link responsive to obtaining the data associated with the first software update;
transmitting the instructions and the data associated with the first software update via a second link with a second device;
receiving confirmation of the instructions and the data associated with the first software update by the second device; and
releasing the second link responsive to receiving the confirmation by the second device.

2. The method of claim 1, wherein the obtaining of the data associated with the first software update comprises:
determining that the data associated with the first software update is stored in a local memory associated with the wireless communication device; and
retrieving the data associated with the first software update from the local memory.

3. The method of claim 1, wherein the obtaining of the data associated with the first software update comprises:
retrieving the data associated with the first software update from the first device via the first link.

4. The method of claim 1, wherein the first device comprises a base station representing a digital enhanced cordless telecommunications (DECT) ultra low energy (ULE) fixed part (FP) of a home automation network (HAN).

5. The method of claim 1, wherein the wireless communication device comprises a first range extender operating as a first DECT ULE FP and a first DECT ULE portable part (PP) in a HAN.

6. The method of claim 5, wherein the second device represents a second DECT ULE PP of the HAN; or
wherein the second device comprises a second range extender operating as a second DECT ULE FP and a second DECT ULE PP in the HAN.

7. The method of claim 1, further comprising:
receiving instructions associated with a second software update from the first device;
obtaining data associated with the second software update;
transmitting the instructions and the data associated with the second software update via a third link with a third device;
receiving confirmation of the instructions and the data associated with the second software update by the third device; and
releasing the third link responsive to receiving the confirmation by the third device.

8. The method of claim 7, wherein the first software update is associated with a different software version than the second software update; or
wherein the first software update is associated with a different software than the second software update.

9. The method of claim 7, wherein the wireless communication device communicates with the second device according to a first communication protocol and communicates with the third device according to a second communication protocol different than the first communication protocol;
wherein, optionally, the first communication protocol comprises a DECT ULE communication protocol, and the second communication protocol comprises a communication protocol other than DECT ULE.

10. A wireless communication device comprising:
a processing system; and
a memory storing instructions that, when executed by the processing system, causes the wireless communication device to:
receive instructions associated with a first software update via a first link with a first device;
obtain data associated with the first software update;
release the first link responsive to obtaining the data associated with the first software update;
transmit the instructions and the data associated with the first software update via a second link with a second device;
receive confirmation of the instructions and the data associated with the first software update by the second device; and
release the second link responsive to receiving the confirmation by the second device.

11. The wireless communication device of claim 10, wherein execution of the instructions further causes the wireless communication device to:
determine that the data associated with the first software update is stored in a local memory associated with the wireless communication device; and
retrieve the data associated with the first software update from the local memory.

12. The wireless communication device of claim 10, wherein execution of the instructions further causes the wireless communication device to:
retrieve the data associated with the first software update from the first device via the first link.

13. The wireless communication device of claim 10, wherein the first device comprises a base station representing a digital enhanced cordless telecommunications (DECT) ultra low energy (ULE) fixed part (FP) of a home automation network (HAN); or
wherein the wireless communication device comprises a first range extender operating as a first DECT ULE FP and a first DECT ULE portable part (PP) in a HAN.

14. The wireless communication device of claim 10, wherein execution of the instructions further causes the wireless communication device to:
receive instructions associated with a second software update from the first device;
obtain data associated with the second software update;
transmit the instructions and the data associated with the second software update via a third link with a third device;
receive confirmation of the instructions and the data associated with the second software update by the third device; and
release the third link responsive to receiving the confirmation by the third device.

15. The wireless communication device of claim 14, wherein the first software update is associated with a different software version than the second software update; or
wherein the first software update is associated with a different software than the second software update.
